# EUROPEAN PATENT APPLICATION

(11) **EP 3 522 066 A1**
(43) Date of publication of application: **07.08.2019**
(21) Application number: 18155332.2
(22) Date of filing: 06.02.2018
(51) Int. Cl.: G06K 7/10

(54) **RFID-READER TO INTERROGATE RFID-TRANSPONDERS ON ITEMS LOCATED IN ITEM HOLDERS**

(71) Applicant: Agimero GmbH, 76229 Karlsruhe (DE)
(72) Inventor: MÜLLER, Holger, 76229 Karlsruhe (DE)
(74) Representative: Zahn, Matthias

(57) **Abstract**

An RFID-reader (180) interrogates RFID-transponders (130-A, 130-B). The RFID-transponders have item-tags (110-A, 110-B) and item-antennas (120-A, 120-B). The RFID-transponders belong to items (100-A, 100-B) that are located in an item holder (150) at random positions (XRA, XRB). The RFID-reader (180) has a reader-antenna (160) for interacting with the RFID-transponders and a reader-circuit (170) for processing data. The reader-antenna has first and second antenna units (160-1, 160-2) physically associated with the item holder. For any random position of an item, the physical antenna-to-antenna distance stays (DA, DB) is below a maximal interrogation distance (Dmax) for at least one of the antenna units. In the reader-circuit, a multiplexer (171) enables the reader-circuit to send excitation signals to the RFID-transponders and to receive response signals from the RFID-transponders, consecutively via the first and second antenna units. The reader-circuit derives data-signals (175-A, 175-B) from response signals (ReA) at the first antenna unit or from response signals (ReB) at the second antenna unit (160-2). The data-signals correspond to data-records of the item-tags.

## Description

### Technical Field

The disclosure in general relates to radio-frequency identification (RFID) technology, and in particular relates to an RFID-reader, and to an interrogation approach.

### Background

In supply chains, supply network and elsewhere, physical things ("items") are moved by a variety of operators - among them manufacturers, suppliers, transport providers - until the items arrive at the hand of the customers. At many points in time and for many locations, the mentioned operators seek transparency. Therefore, the operators track the items in terms of location, number (quantity), kind (quality) and identification and other terms. However, the operators are faced with challenges in situations in that the items can be placed at random locations or moved to/from random positions.

The items can be products that leave a factory in boxes, in containers, in racks, in vehicles or other carriers. The factory operator (or manufacturer) has knowledge regarding the quality and the quantity of the items, usually in form of computer data. However, the situation changes dramatically after the items have arrived at the destination, for example when the items have become goods in a retail store or shop.

Supplier operators and/or store operators place the items into item holders. Usually, the holders are semi-open arrangements that offer the items to human users - to the customers. At any time during the opening hours of the store, the customer-users can physically remove items from the holders. Such behavior is much desired, but to continue the offering to further customers, the operators are interested in determining the number of items that are still located within the holder.

An illustrative example relates to a retail store that sells stationery. The items are commercially manufactured writing materials, such as sheets or blocks of paper, cards, envelopes, pens, pencils etc. The items are temporarily located in holders that are shelfs, racks, boxes etc. As the customer-users frequently remove items from the holders - by taking greeting cards from racks or taking rubber erasers from boxes - the operators need to know the approximate number of items that remain in the holders.

However, such a lower-level granularity to count items might not be sufficient. Due to standardization, the items may appear similar to humans. However, differences between individual items still apply. Human users need time to identify a particular item in a collection of items, and - as a consequence - users may occasionally displace items from a first holder to a second holder. However, such behavior is not desired and can't be avoided. As a consequence, the store operators are interested in identifying what particular items (kind of items, identification of items) are located within the first and the second holders.

To stay with the stationary example, a rack offers greeting cards with text printed on top (e.g., birthday greetings "40", "50", "60" and so on). For customers it might be easy to identify a card with a "40" because the store offers them in relatively large numbers, but it might be complicated to dig out one of the last remaining card with a "90" on top of it. That particular card might have been displaced (i.e. misplaced) by a previous customer to a different holder. As a consequence, the operators seek higher-level granularity by asking for the approximate numbers of items in different holders. In other words, the location of particular items is of interest as well.

At the technical level, radio-frequency identification (RFID) technology can be used to track items. However, the communication between RFID-components is limited by a number of technical circumstances, among them field attenuation and the arrangement of antennas. The limitations negatively influence the use of RFID-technology, in terms of the mentioned granularity levels.

There are also limitations in terms of accuracy, because RFID-components can sometimes ignore items that should be counted.

### Summary

According to embodiments of the present invention, an RFID-reader unit is a combination of a reader-antenna and a reader-circuit. At least the reader-antenna physically associated with an item holder. In the following, the RDIF-reader unit is referred to as "RFID-reader". The items are equipped with RFID-transponders - with item-tags and with item-antennas. The reader-antenna allows retrieving data from substantially all items that are located within the holder. This is accomplished by arranging the reader-antennas as multiple antenna units that comply with predefined distance criteria, and by multiplexing the interrogation by the reader-circuit.

More in detail, the RFID-reader has multiple antenna units that are arranged in antenna-to-antenna distance to the items. The number of antenna units is selected such to that substantially all items in the holder are located in interrogation distance to at least one of the antenna units. The RFID-reader uses the antenna units sequentially so that the RFID-reader interrogates the RFID-transponders sequentially. This approach allows the transfer of data from individual items. The sequential approach further minimizes wave propagation effects by that simultaneously transmitted radio signals from different antennas would neutralize each other (phase-attenuation)

In case that that each item stores different data in comparison to items in the neighborhood (i.e., unique data per item), this approach allows not only to determine the number of items (in the holder) but also to identify particular items in the holder.

Since the interrogation distance (between the RFID-transponders and the RFID-readers) is limited to distances that approximately correspond in their magnitude to the physical dimensions of the holder, interferences between the antennas of different holders are minimized. The interrogation granularity can therefore differentiate between multiple item holders. This allows the identification what particular items are located within the first and the second holders.

At least partially, the antenna units are arranged at the periphery of the item holders so that interrogation is possible for transponders located within the holder.

An RFID-reader has a reader-antenna and a reader-circuit. The RFID-reader is adapted to interrogate RFID-transponders. Each RFID-transponder has an item-tag and an item-antenna. The RFID-reader is adapted to interrogate the RFID-transponders by sending excitation signals and by receiving response signals. (1) The reader-antenna is adapted for being physically associated with an item holder (the holder is adapted to retain one or more items at random positions within the holder). At least one RFID-transponder is attached to each item. (2) The reader-antenna is adapted for being physically associated with the item holder by having at least a first antenna unit and a second antenna unit that are adapted to be physically associated with the item holder, such that - for any random position of an item within the item holder - the physical antenna-to-antenna distance stays below a maximal interrogation distance Dmax for at least one of the antenna units. (3) The reader-circuit comprises a multiplexer that is adapted to enable the reader-circuit to consecutively send a first excitation signal towards the one or more item-tags via the first antenna unit and a second excitation signal towards the item-tag via the second antenna unit. (4) The reader-circuit comprises a data processor that is adapted to derive data-signals that correspond to data-records of the item-tags, from one or more response signals received at the first antenna unit or from one or more response signals received at the second antenna unit.

Optionally, the multiplexer can be adapted to enable the first antenna unit to receive one or more response signals during a first time slot and to consecutively enable the second antenna unit to receive response signals during a second time slot.

Optionally, the data processor can be adapted to derive data-signals from response signals received at the first antenna unit that result from the first excitation signal, or from response signals received at the second antenna unit that result from the second excitation signal.

Optionally, the data processor can be adapted to derive data-signals from response signals received at the first antenna unit that result from either the first excitation signal or from the from the second excitation signal and from response signals received at the second antenna unit that result from either the first excitation signal or from the from the second excitation signal.

Optionally, the maximal interrogation distance Dmax can be obtained as the physical distance between an item-antenna and the reader-antenna, wherein the RFID-reader is able to interrogate the RFID-transponder in case of compliance with the following interrogation conditions: (i) the reader-circuit is able to send the first and second excitation signals to the one or more item-tags, (ii) an item-tag that has received any of the excitation signals is able to consecutively send a response signal, and (iii) the reader-circuit is able to decode the response signal and to derive a data-signal that corresponds to the data-record of the item-tag.

Optionally, the maximal interrogation distance Dmax can be a reduced distance "Dmax short" that is calculated for one or more of the following constraints: (iv) the item holder holds a number of items that physically fit to the item holder and that attenuate excitation and response signals; and (v) the item holder holds a further item that attenuates radio signals.

Optionally, the reader-antenna with the first antenna unit and the second antenna unit can be implemented such that an effective projection from the item-antennas to the antenna units is maximized.

Optionally, the reader-antenna(with the first and second antenna units) can be implemented on a base that is at least partially being coated by conductive material, forming the first antenna unit and - being electrically isolated therefrom - forming the second antenna unit.

Optionally, the reader-antenna can be adapted for being physically associated with an item holder by the base being formable. Optionally, the reader-antenna can be implemented as a printed circuit board (PCB), or the reader-antenna can be implemented as a foil (or by a foil for the base and a foil for the conductive material). Optionally, the reader-antenna can be adapted for being physically associated with an item holder (for example, by inserting into the holder) by the base having a forming pattern. Optionally, a shielding can be provided to keep the excitation signals and the response signals within the item holder.

### Brief Description of the Drawings

FIG. 1 illustrates an overview to an RFID-reader that interrogates RFID-transponders that are attached to items, wherein the items are located in an item holder;
FIGS. 2A and 2B illustrate side-view diagram of items that are located within an item holder, in exemplary scenarios;
FIG. 3 illustrates a block diagram of an item with radio frequency identification (RFID), during interrogation by an RFID-reader;
FIG. 4 illustrates a variation of the block diagram with multiple items;
FIG. 5 illustrates side-view diagrams of an item that is located in the holder, with item-antenna attached to the item, and reader-antenna associated with the holder, for different distances between the antennas;
FIGS. 6A, 6B and 6C illustrate side-view diagrams of an item that is located in the holder, wherein the holder is equipped with a plurality of antenna units of the RFID-reader;
FIG. 7 illustrates a method flow diagram for a method to adapt an RFID-reader to interrogate RFID-transponders located within an item holder;
FIGS. 8A, 8B, 8C and 8D illustrate diagrams of a reader-antenna with antenna units in embodiments where the antenna-units are located on a base material that is being folded upon inserting into the holder;
FIG. 9 illustrates an electrical circuit diagram of an RFID-reader having a reader-circuit with a multiplexer and with a plurality of reader-antennas;
FIG. 10 illustrates a time-diagram for subsequent read-operations (Ex/Re) applied by the reader-device with the plurality of reader-antennas;
FIG. 11 illustrates an arrangement of multiple item holders operating with multiple RFID-readers; and
FIG. 12 illustrates an arrangement of multiple item holders operating with multiple RFID-readers, but with different antenna-to-holder layout patterns.

### Detailed Description

The description starts with explaining writing conventions. In the drawings and in the description, uppercase letters A, B, C, E, F, G can differentiate between particular components, and uppercase letters X, Y, Z indicates coordinates; lowercase letters in parenthesis (a), (b) etc. and integers (1), (2) etc. indicate scenarios; and references with integers indices (-1, -2, etc.) indicate components (of the RFID-reader). Greek letters serve as further indices.

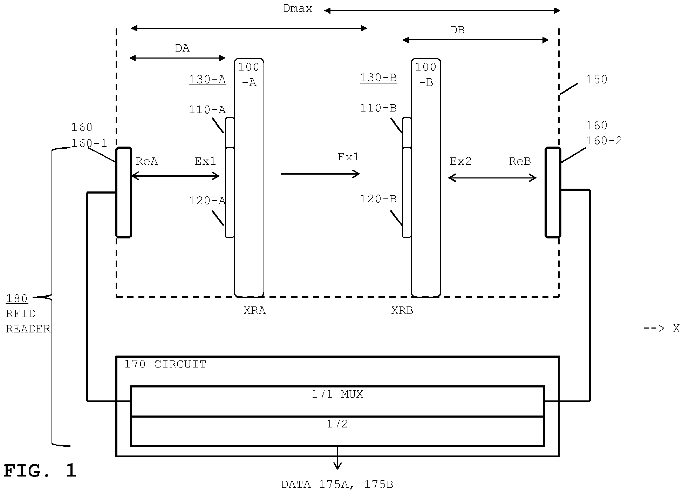

FIG. 1 illustrates an overview to RFID-reader 180 that interrogates RFID-transponders 130-A, 130-B that are attached to items 100-A, 100-B, wherein the items are located in item holder 150. Since the components that are illustrated here (holder, items, antennas, circuitry etc.) can be implemented in various forms, dimensions, numbers, FIG. 1 illustrates the components by symbols.

RFID-reader 180 has a reader-antenna (160) and a reader-circuit (170). For convenience, FIG. 1 illustrates the RFID-reader by bold lines, wherein the other components are illustrated by thinner lines. RFID-reader 180 is adapted to interrogate RFID-transponders 130-A, 130-B. Although FIG. 1 illustrates two transponders, their number can be different. Each RFID-transponder 130-A, 130-B has an item-tag 110-A, 110-B and an item-antenna 120-A, 120-B, respectively. RFID-reader 180 is adapted to interrogate RFID-transponders 130-A, 130-B by sending excitation signals Ex1, Ex2 and by receiving response signals ReA, ReB.

Reader-antenna 160 is adapted for being physically associated with item holder 150. In the figure, item holder 150 is illustrated by dashed lines. As used herein, physical association means that the physical location of the reader-antenna is invariant to the physical location of the holder, at least during the interrogations. In other words, in relation to the holder, the reader-antenna does not move.

Such a physical association can be implemented by a variety of well-known measures, among them:
- mechanical attachment to the holder, by fasteners, such as adhesives, hook and loop fastener, screws and bolts, clips, pins, wire ties, magnets etc.,
- insertion of the antenna as a removable inlay,
- combinations thereof.

Although the phrase "physical association" is used as an "antenna with holder" association, the other perspective "holder with antenna" is also applicable. The phrase is also applicable to the parts or units of the antenna.

Item holder 150 retains one or more items 100-A, 100-B at random positions (XRA for item A, XRB for item B) within item holder 150.

Items 100-A, 100-B have RFID-transponders 130-A, 130-B, so that at least one RFID-transponder is attached to an item (e.g., 130-A to 100-A, 130-B to 100-B).

Reader-antenna 160 has at least first antenna unit 160-1 and second antenna unit 160-2. As the components are illustrated symbolically, FIG. 1 does not show any physical connections between these units. Implementations with physical connection are explained below. Antenna units 160-1, 160-2 are adapted to be physically associated with item holder 150 such that - for any random position of an item 100-A, 100-B within item holder 150 - the physical antenna-to-antenna distance (D collectively for DA, DB etc.) stays below a maximal interrogation distance Dmax for at least one of antenna units 160-1, 160-2. In the example of FIG. 1, distances are given by bi-directional horizontal arrows, with distance DA (item-antenna 120-A and antenna unit 160-1) and distance DB (item-antenna 120-B and antenna unit 160-2) being both below Dmax. In other words, Dmax is the largest allowable distance for that interrogation is possible.

Reader-circuit 170 is communicatively connected to antenna 160 with its units 160-1 and 160-2. In FIG. 1, this connection is illustrated by a wire symbol. The person of skill in the art is able to implement electronic circuitry for sending and receiving radio signals (in the context of RFID) without the need of further explanation herein. Part of the circuitry can be placed next to the antenna so that wires are actually not required.

Reader-circuit 170 comprises multiplexer 171 (MUX) that is adapted to enable reader-circuit 170 to consecutively send
- a first excitation signal Ex1 towards the one or more item-tags 110-A, 110-B via (first) antenna unit 160-1 and
- a second excitation signal Ex2 towards the item-tag 110-A, 110-B via (second) antenna unit 160-2

As it will be explained with more detail, "towards" is understood as a directional indication, but there is no need that every Ex signal is actually being received (by item-tags 110-A, 110-B).

Reader-circuit 170 comprises data processor 172 that is adapted to derive data signals 175-A, 175-B that correspond to the data-records of item-tags 110-A, 110-B. Data processor 172 derives the data-signals from one or more response signals received at antenna unit 160-1 or from one or more response signals received at the second antenna unit 160-2. In the example, ReA is the response signal from transponder 130-A (going to antenna unit 160-1) and ReB is the response signal from transponder 130-B (going to antenna unit 160-2). It is contemplated that other signal paths are possible as well. Other signal paths add redundancy so that the reliability of interrogation is being enhanced.

For simplicity, in the example of FIG. 1, the number of signals is given as two Ex signals and two Re signals. More in general, the number of Ex signals corresponds to the number of antenna units, the number of Re signals corresponds to the number of transponders.

It is noted that - in an ideal case - all transponders that are located within a predefined geometry (i.e., simplified defined as distance) are successfully interrogated, so that data 175A, 175B relates to all items in the holder. However, retail environments may accept an accuracy that does not reach 100 per cent. FIG. 1 illustrates - at least symbolically by presenting the antenna units and the item-antennas by equally sized symbols (vertical rectangles) - that beside the distances, further considerations can increase the interrogation accuracy. The physical dimensions of the antenna units and of the item-antennas are adapted to each other, in combination with the physical dimensions of the item holder. Therefore, the description explains further details regarding topics, such as
- sizes or physical dimensions (of holder, items, antenna units),
- shapes (of the items),
- interrogation pattern (regarding signals Ex, Re, and multiplexing),
- electrical quality of the signals (field strength) and attenuation, etc.

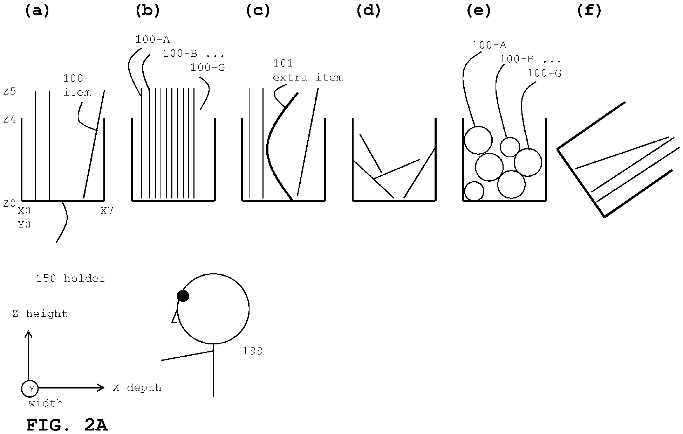

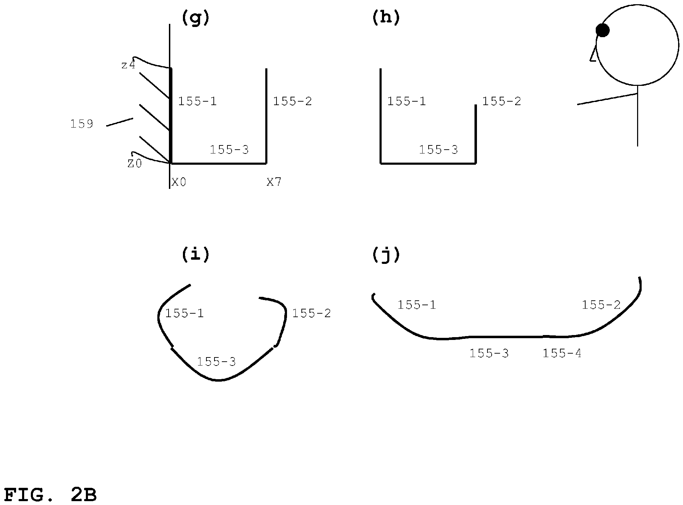

FIGS. 2A and 2B illustrate side-view diagrams of items 100 that are located within item holder 150, in exemplary scenarios ((a), (b), (c), (d), (e), (f) in FIG. 2A, and (g), (h), (i), (j) in FIG. 2B). For simplicity, antennas are not illustrated. Coordinate system X, Y, Z has its origin X0, Y0, Z0 arbitrarily assigned to a corner of item holder 150. System X, Y, Z is a Cartesian system, so that the Y axis is perpendicular to the X axis and to the Z axis. The selection of such a coordinate system is convenient for explanation, but other systems could be used as well. In general, the coordinate system fits to the physical dimensions of the items. Potentially, the Cartesian system might be more suitable for item holder with rectangles; a polar system might be more suitable - at least partially - for item holders that have round-shaped parts (as in (i) and (j)).

As used herein, a "depth" is given in X coordinates, a "width" is given in Y coordinates, and a "height" is given in Z coordinates. User 199 (e.g., the customer-user) is illustrated in side-view as well, here looking in a direction opposite to X. The auxiliary terms (depth, width, height) correspond to the perspective of user 199, but the assignment of these terms to the coordinates is just for convenience, and is not limiting.

Regarding their shape, the items can be flat items (or items in a plane) where one coordinate dimension, such as the thickness (here in the X coordinate) is substantially smaller than the other dimensions (such as Y and Z). In the retail example, such items would be cards, letter envelopes or the like. The items can be three-dimensional items in that all coordinates X, Y, Z would matter. The items can be classified according to standardized geometrical shapes, such as
- polyhedra / polyhedrons (e.g., cubes, pyramids, prisms, cuboids),
- solids of revolution (e.g., cylinders, spheres, cones), and
- others (such as combinations between polyhedra and solids of revolution).

The items in the holder can have different shapes. The items in the holder can have the same physical dimension (i.e. size) or can have different sizes.

In embodiments - especially in retail usage scenarios - the items can be limited to physical things that can be moved out of the item holder by humans without the need to use tools. For example, the items have a mass (or "weight") that allow a customer to handle them.

The person of skill in the art understands further limitations: the items must be large enough to carry the RFID-transponder, and the items must be small enough to be placed into the holder.

Potentially, inserting the items to the item holder can be done without tools as well. It is noted that inserting can be performed by multiple items at the same time. In retail usage scenarios, a store operator user may insert a number of items at the same time (e.g., a bunch of cards).

The following is a list of shapes, with examples relating to the retail usage scenario.
- flat rectangles (e.g., cards, envelopes)
- cylinders (e.g., wrapping paper, things that are offered in cylindrical packages, tubes)
- spheres (e.g., play-balls)
- cuboids (e.g., electronic/electric appliances such as razor devices, packages with products)

Further, by keeping tuned to FIGS. 2A and 2B, description and drawings explain items and arrangements of items by way of the mentioned example scenarios. The focus here will be on flat items, but the teachings and writing conventions herein are applicable for other shapes as well.
(a) Item holder 150 has a depth (from X0 to X7) and has a height (from Z0 to Z4). In the example, the holder is U-shaped, extending along the Y-axis. Item holder 150 retains item 100. Item 100 is illustrated as a flat object (height from Z0 to Z5). It can be placed perpendicular (i.e., YZ-plane of the items corresponding to the YZ-plane of the holder), or it can be placed with some inclination. Items and holder are adapted to each other: the items are in parallel to the walls of the holder. In the stationary example, the items are cards (made of paper), in approximate dimension with a height between 100 and 200 mm (Z5) and a width between 50 and 150 mm (Y). The thickness (i.e., depth) corresponds to that of paper. More in detail, item 100 can be a greeting card with a folded paper inlay (with the item-tag) and with a paper envelope.
(b) Item holder 150 is packed with a plurality of items 100-A, 100-B ... 100-G. In the example, the number of items currently located within the holder is M. The maximal number M max is limited by the thickness (depth) of each item and the depth of the holder. As in the example, the items are in regular arrangement (here in parallel). A zero number of items is possible (holder without items), but not illustrated.
(c) There is an extra item 101 that is different from item 100, such as a separation sheet. Extra items can be an item that is not supposed to be located in the holder, such as a "parasitic item". Such situations may even occur in the above-mentioned context of misplaced items.
(d) There are other items, with irregular arrangement, in the retail example that could be a bargain bin.
(e) This scenario is an example for different shapes and different sizes of the items. In the retail example, the items are play-balls.
(f) The items holder is arranged not perpendicular to the ground. The holder is oriented such that the items remain inside by virtue of gravitation. Inclinations of the items are possible. The holder is open at the top and at the side. In retail, such an arrangement is potentially more attractive to customer-users. For this scenario, the coordinate system could be re-oriented as well. As it will be explained below, the relative position between the item-antennas and the reader-antenna units (cf. FIG. 1) has to be considered.
(g) The figure illustrates that item holder 150 can be attached to a furniture element 159, such as to a rack. Potentially, item holder 150 can also be attached to a wall. The figure also identifies holder planes 155-p (p = 1 ...P). There is a first holder plane 155-1 (left side, YZ-plane with X = X0), 155-2 (right side, YZ-plane with X = X7), and 155-3 (lower side, XY-plane, Z = 0). In the example, the holder planes have similar dimensions (i.e., distance from Z0 to Z4 is substantially equal to the distance from X0 to X7. This is convenient for explanation, but not required. In the example, there are P=3 planes.
(h) The figure illustrates that item holder 150 can be varied in the dimension, in the example, plane 155-2 is shorter than plane 155-1.
(i)(j) Again the holder is modified. In this case, the holder "planes" are no longer planes with one Cartesian coordinate being equal. The example illustrates a generalization: the holders have portions (155-p), and the holder portions can be planes (as in (a) to (h)) or can have other forms (as in (i) and (j)). In other words, holder can have a "free form" that with portions that are curved or spherical. It is contemplated that the item holder can be implemented in the form of a tube or cylinder.

For simplicity, side-walls of the holders (i.e. in the XZ-plane in (a) to (h)) are disregarded. As it will be explained below, the antenna units (cf. FIG. 1) can be associated with the holder portions (155-p). The holder portions and the antenna units are thereby in a predetermined position with respect to each other. There is no need to attach antenna units to all portions. For simplicity, the description concentrates on planes, but the other forms are contemplated as well.

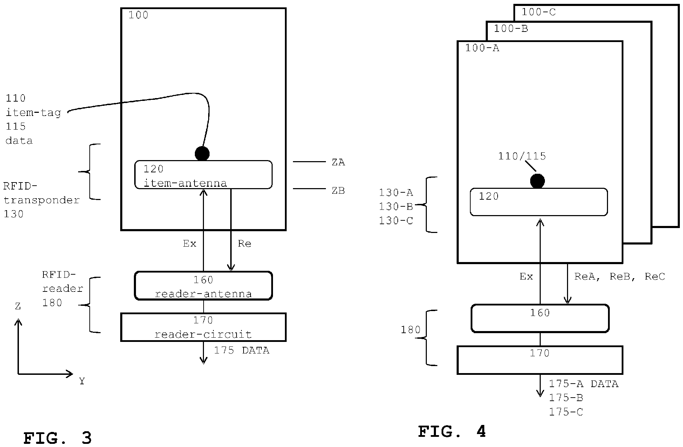

FIG. 3 illustrates a block diagram of item 100 with radio frequency identification (RFID). At the item, RFID-transponder 130 has an item-tag 110 and an item-antenna 120. RFID-reader 180 (or reader device) has reader-antenna 160 and reader-circuit 170. At least, reader-antenna 160 is associated with the holder (cf. FIGS. 1, 2A and 2B).

Item-tag 110 stores data-record 115. Techniques to store data for RFID purposes are known in the art. For example, data-record 115 can be a hexadecimal number with a given number of bits (such as 192 bit). Data-signal 175 is data provided by reader-circuit 170. Data-signal 175 corresponds to data-record 115. Data-signal 175 can comprise further data (that is not from the tag) that relates to the interrogation as an action, such as meta-data (e.g., time stamp indicating the time of reading, identification of antenna 160, antenna-unit 160-1, 160-2 etc., identification of item holder 150, if available).

In the retail scenario, data-record 175 can be further processed, for example, by so-called middleware computers, to obtain information such as:
- a serial number of an item,
- a type identification (e.g. differentiating a "40" greeting card from a "90" greeting card,
- an order number (or other information that is relevant commercially).

Further processing can optionally use the further data (e.g., meta-data) and can use mapping tables (e.g., data 115 to type ID) etc.

When RFID-reader 180 interrogates RFID-transponder 130, data-record 115 is communicated from RFID-transponder 130 to RFID-reader 180 according to a sequence of steps that are well-known in the art. Since the description will discuss details such as physical distances, the main points are mentioned here again for an interrogation that operates according to the RFID-standards.

RFID-reader 180 provides the excitation signal Ex (via reader-antenna 160 and reader-circuit 170, cf. FIG. 1). Signal Ex provides electrical energy to item-tag 110 (the RFID-transponder being a so-called passive transponder). Item-tag 110 sends a response signal Re to reader-circuit 170 (i.e., reader-antenna 160 catches this signal). Reader-circuit 170 decodes the response signal Re and derives data-signal 175.

In other words, the excitation signal Ex goes from reader-antenna 160 to item-antenna 120, and the response signal Re goes in the opposite direction. RFID- tags and RFID-readers can operate in frequency bands between 900 and 950 MHz (in the so-called UHF-frequency band). The person of skill in the art can use different frequency bands (e.g. in the so-called low frequency or high frequency bands that are standardized for RFID).

FIG. 4 illustrates a variation of the block diagram (of FIG. 3) with multiple items 100-A, 100-B, 100-C. (For flat items, the plurality can be considered as a "stack"). Accordingly, there are transponders 130-A, 130-B, 130-C, or any number M (corresponding to items in the holder). A single excitation signal Ex can cause multiple response signals ReA (from item 100-A), ReB (from item 100-B), and ReC (from item 100-C). Techniques to differentiate the response signals from other are known in the art, for example as "anti-collision" techniques.

Usually, one RFID-reader communicates with a plurality of the RFID-responders 130 in multiple items). For simplicity, it can be assumed that one item is equipped with one item-tag.

For convenience of illustration it can be assumed that the response signals arrive at a point in time when the RFID-reader does not provide excitation signals. It is however contemplated that response signals may arrive even when reader-antenna 160 is still sending out the excitation signals.

In other words, signal interferences - if any - in terms of time can be neglected, or can be addressed by those of skill in the art. However, there are signal attenuations in terms of space to be considered. Such attenuations are constraints that impose the risk of interrogation failure. In the following, the description explains the aspect of antenna-to-antenna distances, and the aspect of shielding by items.

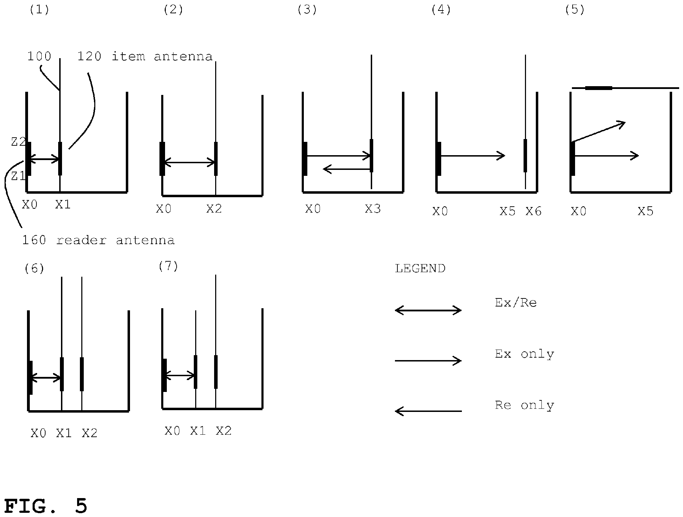

FIG. 5 illustrates a side-view diagram of an item that is located within the holder, with item-antenna 120 attached to item 100 and with reader-antenna 160 attached to item holder 150, for different distances between the antennas. For simplicity of explanation, the description introduces the following conventions:
i) Distances are illustrated in one coordinate only, here in the X-coordinate. The person of skill in the art can consider distances in 3-dimensional space, in the Cartesian system (X, Y, Z) or in other coordinate systems (e.g., as Euclidean distances).
ii) Item-antenna 120 is attached to surface of the item, and reader-antenna 160 is associated with holder planes (FIG. 1B, 155-1 etc.). This leads to a substantially co-planar arrangement (i.e., the item and holder planes are in one plane, here YZ).
iii) The further dimension (position of antennas in height) should be substantially similar for the item-antenna 120 and for the reader-antenna 160 (in the example, Z1 and Z2 for all antennas).

Actual physical distances are measured an antenna-to-antenna-distance D (cf. FIG. 1, with D with indices, DA, DB). As used herein, a maximal interrogation distance Dmax is a distance between item-antenna 120 and reader-antenna 160 that allows compliance with the following interrogation conditions (cf. FIGS. 1, 3, 4 for the components):
(i) Reader-circuit 170 is able to send excitation signal Ex to item-tag 110.
(ii) Item-tag 110 is able to consecutively send a response signal Re to reader-circuit 170 (i.e., reader-antenna 160 can catch this signal), and
(iii) Reader-circuit 170 is able to decode the response signal Re and to derive data-signal 175 that corresponds to the data-record 115 of the item-tag 110.

Actually measuring the distances (i.e., in millimeters) is not required. While measuring (or estimating) the physical distances is straightforward, the determination of the maximal interrogation distance Dmax can be performed:
- by calculating it according to the theory of electromagnetic fields, radio technology,
- by identifying the distances according to data that is provided by the manufacturers of the RFID-transponders and of the RFID-readers, and/or
- by performing simple experiments.

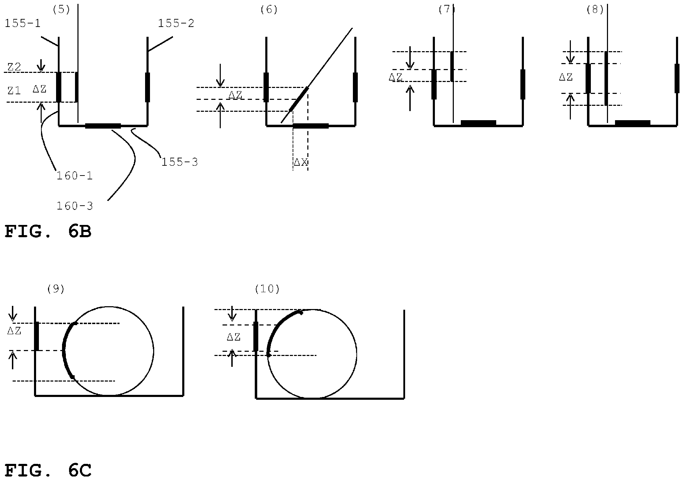

It is noted that the maximal interrogation distance Dmax further depends, on a variety of factors such as:
- the orientation between the antennas (in the example, antennas 120 and 160 are in parallel, co-planar, cf. FIGS. 6B, 6C for details)
- the sizes of the antennas (or size ratios between them, cf. FIGS. 6B, 6C)
- the electrical energy emitted by the reader antenna (Ex signal)
- the frequency of the signals
- the sensitivity of the reader antenna (Re signal).

The following example gives some scenarios.
(1) As item 100 is located at position X1, the antenna-to-antenna distance (from X0 to X1), is below Dmax (compliance with the interrogation conditions). This is indicated by double-arrow symbols, both for the Ex and the Re signals.
(2) As item 100 is located at position X2, the antenna-to-antenna distances (from X0 to X2) is still below Dmax (double-arrow symbol, compliance)
(3) As item 100 is located at position X3, the antenna-to-antenna distance (from X0 to X3) is above Dmax. The Ex signal reaches the item-antenna, but the Re signal does not reach the reader-antenna. There is no compliance.
(4) As item is located at position X6, even the Ex signal does not reach item antenna 120. Since there is no energy arriving at the item-tag, the there is no response Re either. The antenna-to-antenna distance is above Dmax. There is no compliance.
(5) As the items place out of standard, there is no interrogation possible, Ex signals reaching to X5. There is no compliance. The example illustrates that Dmax can depend on the direction.
(6) As two items are located as positions X2 and X3, interrogation of the first item's transponder is possible (below Dmax, compliance). But signal attenuation by first item has reduced Dmax. Interrogation of the item as X3 is not possible (no compliance). This example illustrates the further constraint of items that are located on the holder.
(7) This is similar to 6), but the item at X2 on the left side has a smaller height. Potentially this reduces the attenuation, but the Dmax condition for the item at X3 is not complied with.

In other words, for RFID-reader 180, the maximal interrogation distance Dmax can be a reduced distance "Dmax short" that is calculated for one or more of the following further constraints:
- Item holder 150 holds a number of items 100 that physically fit to item holder 150 and that attenuate excitation and response signals (cf. scenario (b) in FIG. 2A)
- Item holder 150 holds further item 101 that introduces further attenuation (but known attenuation properties).

Having explained the dimension constraints, the description now turns to a solution. The solution occasionally departs from the conventions (i), (ii) and (iii), by being more general. For example, (i) distances in X-coordinates can be considered as Dmax ranges, (ii) co-planarity and (iii) dimension similarity is discussed under the aspect of projections.

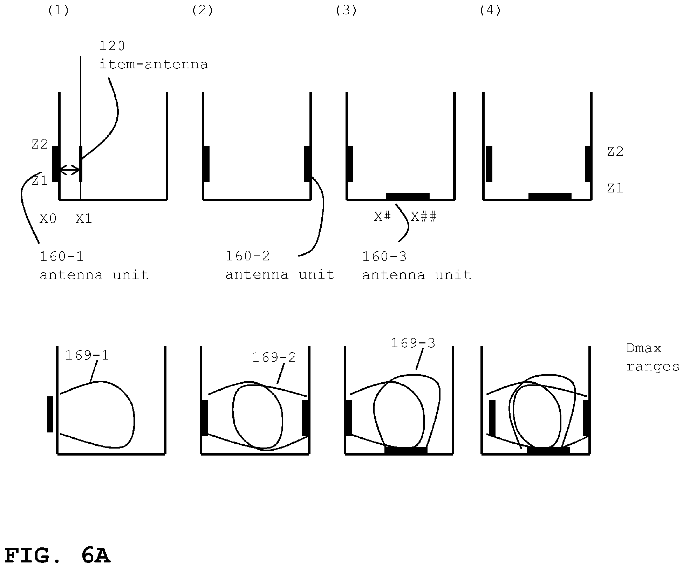

FIG. 6A, 6B and 6C illustrate side-view diagrams of item that are located in the holder, wherein the holder is equipped with a plurality of antenna units of the RFID-reader. Antenna units are assumed to extend along the width Y of the holder. Again, there are some scenarios:
(1) Antenna unit 160-1 is associated with one of the walls of the holder. X0/Z1 and X0/Z1 are the coordinates (of unit 160-1).
(2) Antenna units 160-1 and 160-2 are associated with the holder at opposite walls. Both units have similar dimensions (ZA/ZB).
(3) Antenna units 160-1 and 160-3 are associated with the holder at a side plane (cf. plane 155-1 in FIG. 2B) and at the "ground" plane (cf. 155-3, X-coordinates X# and X##). In other words, the holder is U-shaped (cf. FIG. 2A) and the combination of the antenna units has an L-shape that fits into the holder.
(4) Antenna units 160-1, 160-2, 160-3 (i.e., p=3) are located at the planes that are available. The holder is U-shaped (cf. FIG. 2A) and the combination of the antenna units has the U-shape as well. Both U-shapes are oriented likewise (i.e., overlapping). The U-shape can also be considered as a "double-L-shape".

FIG. 6A also illustrates the maximal interrogation distances Dmax, not only in the X-coordinate, but as interrogation range (in the XZ plane) 169-1, 169-2, and 169-3 for the antenna units.

The example of FIGS. 6A, 6B and 6C (and also that of FIG. 5) illustrate the general principle that the physical dimensions of the antenna units (for at least some of the units) are adapted to the physical dimensions of the item-antennas when the items are placed into the holder. As in the example, the height of units 160-1 and 160-2 corresponds to the height of the item-antennas when the items are placed in the holder.

The description explains this principle by illustrating design rules to dimension the position of the antenna units on the holder. There is an assumption that the physical dimensions of the item holder remain unchanged. The item holders stay adapted to the items, as explained in view of FIGS. 2A and 2B. For example, a holder for cards must have certain dimensions; otherwise the cards would not fit. The antenna units are slim enough to allow the item holders to hold items (as primary function).

There is a further assumption that the positions of the item-antennas on the items are known already. The same principle is also applicable when starting with the antenna units to identify the position of the item-antennas on the items.

The design rules can be implemented in computer aided design (CAD) environments.

In a first step, a portion of the holder is identified under the condition that an antenna unit can be associated with this portion. This does not mean that an antenna unit is associated indeed. In the example, antenna units 160-1, 160-2 and 160-3 can be associated to planes 155-1, 155-2 and 155-3, respectively.

In a second step, projections are made, from the edges of the item-antennas to the holder portions in case that the items are located in the positions that is expected during use. As it will be explained, the positions are not necessary ideal positions (e.g., an upright position of a card) but positions that are likely to be assumed by the item (e.g., due to gravity, user interaction etc.). For simplicity, the projections are illustrated by dotted lines orthogonal to areas in the YZ-plane.

In a third step, the antenna units are dimensioned such that the overlap (i.e. "effective projection") of the projections to antenna units is maximized. There is a difference between the projection to the plane/portion (dotted line) and the effective projection to antenna units (dashed line).

In a fourth step - optional - the items are positioned in a further position (during use) and the steps are repeated.

The scenarios explain this design-rule-based approach by example:
(5) As mentioned, the dotted lines (...) indicate projections of the item-antenna to plane 155-1 of the holder. In this case, the projection corresponds to antenna-unit 160-1. Both antennas have a common height (from Z1 to Z2). The item is placed in parallel to the walls of the holder. As consequence, both antennas - that are planes - are located in parallel. As the projection, in the example ΔZ (between Z2 and Z1), is maximized, the effective overlap between the antennas is maximized. As a consequence, the signal communication (Ex and/or Re) with antenna unit 160-1 is optimized and the likelihood of compliance with the interrogation conditions is maximized.
(6) The item is placed with an inclination (cf. the fourth step). It is noted that - in this example - the inclination angle is limited by the overall height of the item that touches one of the walls. Such positions of the items can be expected during use (e.g., if customers have removed most of the items). The dashed lines (- - -) indicate that indicates effective projections ΔZ to antenna unit 160-1 and ΔX to antenna unit 160-3. There is overlap (effective projection to the antenna units), not at the maximum, but for two antenna units. This redundancy favors the interrogation. While antenna unit 160-1 might not be able to interrogate, antenna unit 160-3 might be able, or vice versa.
(7) There is no perfect fit between the item-antenna and antenna unit 160-1, but there is overlap. Persons of skill in the art can take tolerances into account.
(8) Antenna unit 160-1 is relatively short-sized and the item-antenna is relatively large-sized. Overlap (i.e. effective projection) is available.

Implementations can take into account that the item-antennas are used only once so that the overall material consumption is expected to be lower for relatively larger antenna units and relatively shorter item-antennas.

As in FIG. 6C, scenarios (9) and (10) indicate that shape of the antennas are not necessarily planes. Since the items can have non-planar shapes (cf. FIG. 2A(e) with an example of the drawings), there is still effective projection (overlap) available, for different possible positions of the items within the holder.

In case of a non-planar shape of the holder (e.g., as in FIG. 2B (j)), the antenna-units can be dimensions accordingly. Those of skill in the art can apply antenna-to-antenna projections for substantially any shapes.

Using projections for the design rules can be advantageous due to simplicity of use. As radio waves propagate with location-dependent field strength according to a rather non-linear geometry, the projections are simplified but accurate enough for the explained purpose.

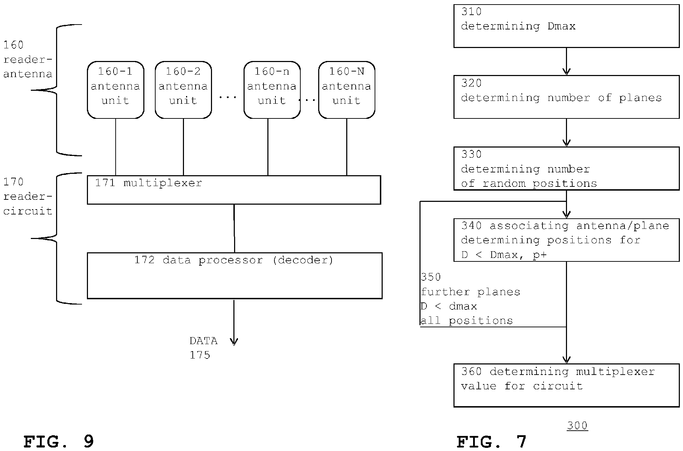

FIG. 7 illustrates a method flow diagram of method 300 for adapting RFID-reader 180 to interrogate one or more RFID-transponders 130, wherein the RFID-transponders (130) are attached to one or more items 100 that are retained by item holder 150.

Method 300 is performed in a setting as explained: RFID-reader 180 has reader-antenna 160 and reader-circuit 170 to interrogate one or more RFID-transponders 130. Each RFID-transponder has item-tags 110 and item-antenna 120. RFID-transponders 130 are attached to one or more items 100 that are retained by item holder 150.

In step determining 310, a maximal interrogation distance (Dmax) is determined. Dmax is the antenna-to-antenna distance between item-antenna 120 and reader-antenna 160.

In step determining 320, a number P of holder planes 155-p of item holder 150 is determined. Antenna units 160-p are able to be associated with holder planes 155-p, cf. the example above with P=3. It is noted that not all planes may be suitable for antenna units.

In step determining 330, a number R of potential random positions is determined, for that item holder 150 is adapted to retain at least one item 100 within holder 100. Random positions are illustrated, for example as X1, X2, X3, X6 (cf. FIG. 5).

In step associating 340, a particular antenna unit is associated with a particular holder plane (e.g., unit 160-1 with plane 155-1) and for that antenna unit, the random positions are identified for that the antenna-to-antenna distance is below the maximal interrogation distance Dmax, cf. the example of FIG. 5, with X1 and X2 being within Dmax. Step associating 340 can be implemented according to the design rules (explained with FIGS. 6A, 6B). Some of the planes might not qualify for association. In implementations, a counter p can be incremented for each association (p+).

In repeating 350, the associating step is repeated for further antenna units (e.g., units 160-2, 160-3) and for further holder planes (e.g., planes 155-2, 155-3) until the antenna-to-antenna distance D is below Dmax for all potential random positions, for at least one of the antenna units. An example has been explained in connection with FIG. 6A, where units 160-2 and 160-3 are introduced. For any random position, there is - at least - one antenna unit that complies with the distance condition.

In step determining 360, the overall number of holder planes (for that the association is possible, in the example P = 3, last counter value for p) is determined as a multiplexer value for that reader-circuit 170 of RFID-reader 180 consecutively uses the antenna units (160-1, 160-2, 160-3) for interrogating the item-tags. In other words, while steps 310-350 address the physical dimensions (of holder and antenna), determining relates to the settings of the reader-circuit. In this example, the number of planes correspond to the number of antenna-plane-associations, with P = 3. It is noted that some planes (or portions) might not qualify for antenna units (cf. FIG. 2B (i) and (j) potentially with some portions having irregular shape).

Optionally, determining 310 the maximal interrogation distance Dmax is performed for a condition that item holder 150 holds a maximal number of items. This approach addresses the signal attenuation by items. In worst-case situations, the holder as many items as they fit to the holder.

Having explained the approach to adapt the reader, with the determination of the interrogation distance(s) and with the determination of P (antenna units, being also a multiplexer factor for multiplexer 171), the description now turns to some implementation options.

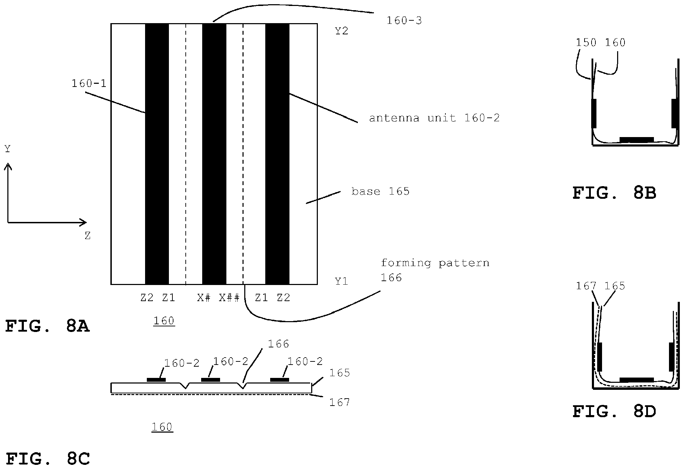

FIGS. 8A, 8B, 8C and 8D illustrate diagrams of a reader-antenna 160 (with antenna units 160-1, 1602-, 160-3) in implementations where the antenna has base 165 and where base 165 is being formed upon being inserted into the holder. In other words, reader antenna 160 is adapted for being physically associated with item holder 150 by a base that is formable.

The reader-antenna with the at least two antenna units can be implemented on a base that is at least partially being coated by conductive material, forming the first antenna unit and - being electrically isolated therefore - forming the second antenna unit.

The illustration uses an example with three antenna units. FIGS. 8A and 8C illustrates antenna 160 prior to forming (view-from above), and FIGS. 8B and 8D illustrate antenna 160 being formed into holder 150 (side-view, XZ-plane). Terms like "form" or "forming" stands for any plastic deformation of the base that changes its shape, "formable" indicates the ability for such deformation. It is noted that - in the example - a deformation of the antenna units is not required.

As illustrated in FIGS. 8A and 8C, antenna 160 comprises base 165 and antenna units 160-1, 160-2, 160-3 that are electrically isolated from each other, and that are electrically isolated to base 165. The number of P = 3 units is just an example. Base 165 is at least partially being covered (e.g., coated) by conductive material (i.e., by the antenna units).

Base 165 can be implemented as a substrate that is common for the antenna units. Forming pattern 166 indicates where the shape change has to be applied to base 165. The pattern is an optional feature. If applied, folding pattern 166 can be implemented as a visual indication or can be implemented as a preparation for forming (e.g., by removing some part of the material, by arranging holes in the base, or otherwise).

Base 165 can be made from materials that are relatively stiff, relatively semi-flexible, or relatively flexible materials. Depending on a given elasticity of the material (i.e., "stiffness"), the person of skill in the art can implement forming (i.e. the shape change) according to well-known process step, from bending (stiff material) to folding (flexible material). Therefore, the description refers to two examples at both extrema of elasticity.

FIG. 8C illustrates the example for relatively stiff material: the base and the antenna units can be implemented by materials that are conventionally used for a printed circuit board (PCB). Much simplified, the base corresponds to the "board" (e.g., a laminate material), and the antenna units correspond to the "circuit" (e.g., copper Cu, aluminum Al etc.). FIG. 8C symbolizes forming pattern 166 as a milling cut with a cutting angle of approximately 90 degrees.

FIG. 8B illustrates the example for relatively flexible material: antenna 160 (base and antenna units) can be implemented by foils for the base and for the antenna units. Forming can be bending (usually by hand, without using tools). As illustrated by the dashed lines in FIG. 8A, forming pattern 166 indicates bending edges (i.e., edges where bending should be applied). Since pattern 166 is an optional feature, implementations comprise: the indication of suitable folding locations on a drawing, and/or a print-marking on base 165 (cf. FIG. 8A).

The dimensions for antenna 160 (base 165 and units 160-1, 160-2, 160-3) are given by coordinates, for example:
- the width of base material 165 corresponding to the width of item holder 150, from Y1 to Y1;
- the height of antenna units 160-1 and 160-2 (in Z-coordinates)
- the depth of unit 160-3 (in X-coordinates, here X# and X##).

As illustrated, antenna 160 fits to the example with equally dimensioned planes (155-1, 155-2, 155-3, in FIGS. 2A, 2B, cases (a) to (g)). For other holder dimensions, the person of skill in the art can dimension base material 165 accordingly (e.g., unit 160-2 shorter in case (h)).

The example of FIGS. 8A and 8B again illustrate the general principle that the physical dimensions of the antenna units (for at least some of the units) are adapted to the physical dimensions of the item-antennas when the items are placed into the holder. As in the example, the height of units 160-1 and 160-2 corresponds to the height of the item-antennas when the items are placed in the holder, cf. FIG. 5.

FIGS. 8C and 8D illustrate that shielding 167 can optionally be applied, with the function to keep the excitation signals Ex and the response signals Re within the item holder. Looking at the structure, the shielding can be applied to antenna 160 and/or to item holder 150.

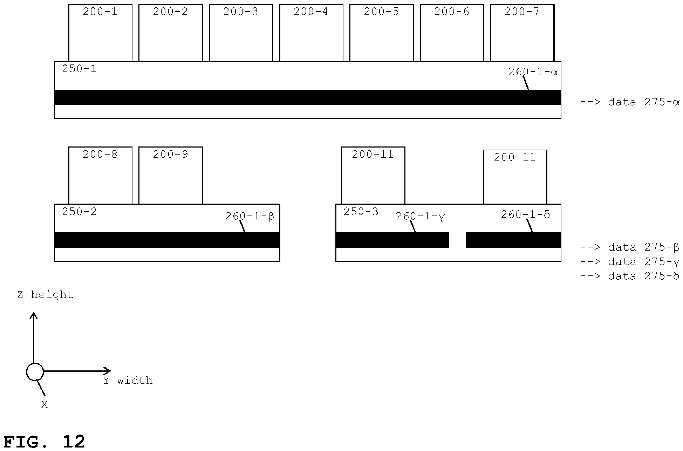

Shielding can be applied to the side of base 165 that is opposite to the antenna units. Shielding 167 comprises electrically conductive material such as a metallic foil (Cu, Al, etc.), as a metallic net, as a coating, or otherwise. Shielding 167 is isolated from the antenna units. Shielding 167 is located at the side that the opposite to the items on the holder. Shielding has the function to keep RFID-signals (Ex, Re) within the item holder. In case that separate RFID-readers are applied to separate item holders (cf. FIG. 12), this measure reduces "cross-talk". This can be advantageous for levelling up the interrogation granularity from lower-level counting for one holder to higher-level counting for multiple holders.

If shielding 167 is applied to the back-side of base 165, it would be applied prior to folding. PCB-materials and foils with two electrically conductive layers are available in the art. The skilled person can take measures to keep shielding as one layer, even if base 165 is being formed.

Although shielding is illustrated as part of antenna 160 (i.e., at the substrate), the shielding can be implemented otherwise, for example by applying shielding to the item holder, or by constructing the item holder - at least partially - from electrically conductive material.

In case that communication connections between the antenna units and the reader-circuit (cf. FIG. 9) are implemented by shielded cables (such as coaxial cables), the conducting shield of the cable is electrically connected to shielding 167.

FIG. 9 illustrates an electrical circuit diagram of an RFID-reader 180 having a reader-circuit 170 with a multiplexer 171 and with a plurality of reader-antennas.

In general, there are N antenna units 160-n. (e.g., N=2 in FIG. 1, N=3 in FIGS. 8A, 8B, N=4 if used for scenario (j) in FIG. 2B and others).

As already mentioned, multiplexer 171 allow the interrogation via Ex and Re signals in sequence. During one interrogation period, multiplexer 171 activates the antenna units to send excitation signals Ex, in a sequence for substantially all antenna units. The sequence can correspond to the indices (e.g., starting at 1 with Ex1, ending at N with ExN), but a different order can also be implemented. During the interrogation period, multiplexer 171 also enables the antenna units to receive the response signals. As mentioned above, the sequential approach minimizes wave propagation effects by that simultaneously transmitted radio signals from different antennas would neutralize each other (phase-attenuation).

Multiplexer 171 can be implemented in a variety of forms, among them the following:
- Multiplexer 171 can be an electronic circuit that is arranged at the base material 165 (cf. FIG. 5) and that this wired to antenna units 160-n. Optionally, the antenna units and the wires are implemented together as a printed circuit-board.
- Multiplexer 171 can be an electronic circuit that is arranged in an enclosure that is separated from item holder 150 (connection for the signals from antenna units 160-n via cable or via radio link).
- Multiplexer 171 can be implemented by a computer module (processor, memory, computer-instruction etc.) that is communicatively connected to the antenna units 160-N.

Data processor 172 provides data-signal 175. For one interrogation period, data-signal 175 comprises data for the items that are placed within the holder. Some of the transponders eventually return Re signals twice or more times, but data processor 172 can disregard such signal repetitions. The approach provides redundancy.

Indicators for the above-mentioned accuracy can be measured and determined, and can be used as a design parameter (for the above rules). For example, a ratio Re/M can be defined between the numbers of Re signals and the number M of items (i.e., transponders). A ratio Re/M below 1 indicates failure (not all M items are detected). A ratio Re/M above 1 can trigger further measurement to inspect data (i.e., 175) to check of the accuracy is 100 per cent or not.

It is noted that interrogation periods can be repeated, so that the probability of interrogating (and the accuracy) is increased.

Data processor 172 can be implemented as a computer that is communicatively connected to multiplexer 171. Persons of skill in the art can select computers that are suitable. For the retail environment, it can be a computer in the so-called "industrial computer", "industrial PC", "industrial personal computer" category.

Data processor 172 can also be implemented as an electrical circuit component that is integrated together with multiplexer 171.

Those of skill in the art understand that data processor 172 can be implemented as a function of a computer (that is implemented external to item holder 150). In the RETAIL use case, there are multiple other computers in the store, so that some of the computers can perform the function of data processor 172.

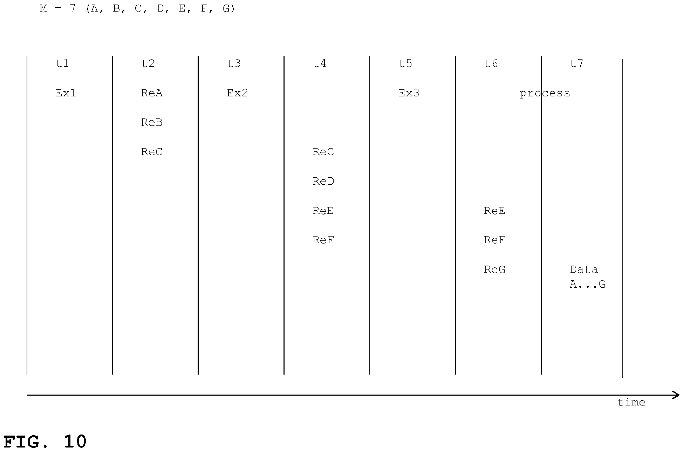

FIG. 10 illustrates a time-diagram for subsequent read-operations (Ex/Re) applied by RFID-reader 180 with a plurality of N=3 reader-antennas 160-1, 160-2, 160-3 (cf. FIG. 6A), during one interrogation period. In the example, the holder retains M = 7 items (A to G). The progress of time is indicated from left to right, by sub-periods ("or time slots") t1 to t7. The duration of the sub-periods can vary, but the person of skill in the art can select the suitable durations.

| | |
|---|---|
| t1: | Unit 160-1 provides Ex1. It is assumed that Ex1 reaches transponders in the items A, B, C and D. |
| t2: | The transponders in A, B and C have sufficient energy to return ReA, ReB and ReC signals that are received by unit 160-1. |
| t3: | Unit 160-2 provides Ex1, reaching C, D, E and F |
| t4: | C, D, E and F return signals ReC, ReD, ReE and ReF. ReC is a redundant signal and carries the same information (data regarding C) as during t2. |
| t5: | Unit 160-3 provides Ex3. |
| t6: | E, F, and G return signals, again with redundancy (in E and F) |
| t7: | Data processor 172 (cf. FIG. 1, FIG. 9) provides data 175, with data sets for items A to G. |

It is noted that techniques to avoid collision (i.e., the reader communicating with multiple tags at the same time, such as during t2, t4 and t6) are available on the art.

In this example, the Re/M ratio is 12/7, well above 1. Since data-records arrived from all M=7 items, the accuracy is 100 per cent.

To increase accuracy in practical use (e.g., in a store), interrogation periods can be repeated. Interrogation periods (e.g., t1 to t7) have durations in the magnitude of seconds. In retails environments it can be assumed that the number of items in the folder remains constant. Interrogating periods can be triggered when the retail store is closed for customers. Interrogating outside opening hours can detect activities: data sets 175 with increasing numbers of data may indicate the insertion of items into the holder, data sets 175 with decreasing number may indicate removal of items (e.g., if the holder loses the items in case if unexpected events).

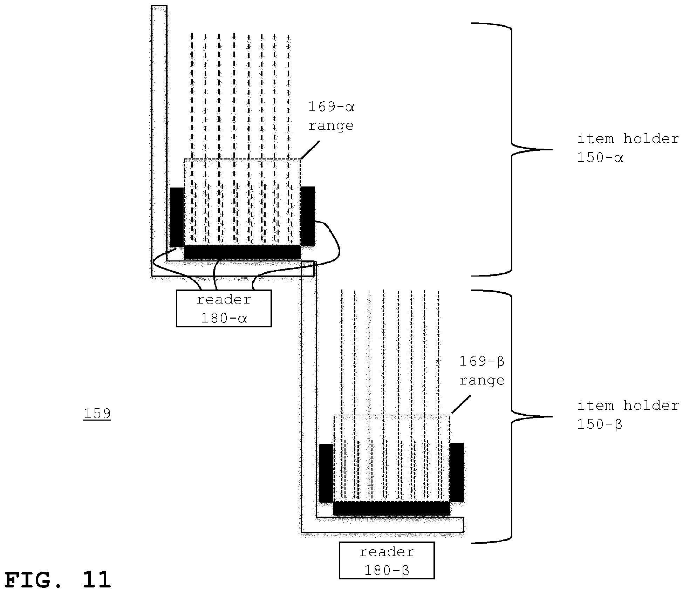

FIG. 11 illustrates an arrangement of multiple item holders 150-alpha, 150-beta operating with multiple RFID-readers 180-alpha, 180-beta. In the example, the arrangement is part of a rack 159 (cf. 159 in FIG. 2B). In the retail example, item holder 150-alpha retains greeting cards with a first group of messages (e.g., birthday greetings), and item holder 150-beta retains greeting cards with a second group of messages (e.g., condolences).

Ranges 169-alpha and 169-beta indicate the Dmax distances (in the YZ-plane), wherein ranges do not overlap. Ranges 169-alpha, 160-beta mostly correspond to the positions of the items (i.e., the item-antennas) within in the holders. Arranging the antenna units within the holders (cf. FIG. 6, FIG. 8B) and placing the antenna units in proximity to the items (cf. the explanation of the distances above in the description) can have an advantage of low parasitic radiation. In other words, "cross-talk" between RFID-readers is minimized. It is expected that the signals do not propagate across holders. For signals (Ex and/or Re) that leave the holders, at least of the above interrogation conditions is not complied with. Shielding can be applied optionally.

FIG. 12 illustrates an arrangement of multiple item holders 250-1, 250-2, 250-3 operating with multiple RFID-readers (similar as in FIG. 11). Different antenna-to-holder layout pattern provide different item detection granularity levels. The figure is oriented as a front-view (as if a user would look to the holders). Items 200 can be considered as pluralities of items, such as stacks of items. In the example, item-staples 200-1 to 200-7 are located in holder 250-1. To stay with the example of cards, there could be up to 30 cards in each staple, totaling up to 210 items. Item-staples 200-8 and 200-9 are located in holder 250-2, and item-staples 200-11 and 200-11 are located in holder 250-3.

Antenna units 206-1 are symbolized for the front plates of the holders, by black rectangles. For simplicity, the other antenna units are not illustrated. The second index (alpha, beta, gamma, and delta) identifies separate RFID-readers that provide separate data sets. Data 275-alpha provides data regarding the presence of particular items (e.g., of the 210 items) in holder 250-1, but not differentiating the positions within the holder. Data 250-beta provides data regarding the presence of particular items in holder 250-2. Holder 250-2 is smaller than holder 250-1 so that the detection granularity level for holder 250-2 is higher. Holder 250-3 has two RFID-readers, so that the resulting detection granularity level is even higher: Data 275-gamma indicates presences on the left side, and data 275-delta indicates presences on the right side (of holder 250-3).

The description now closes with optional implementation details. The example of greeting cards in a retail environment is convenient for explanation but not limiting.

Items can be equipped with two (or even more) transponders, in different part of the items. Some items are usually placed into the holders with an orientation. In the example of greeting cards, the customer user (e.g. 199 in FIGS. 2A, 2B) would be able to read the message from at least the first card in the stack. A message on an card that is placed upside-down would be difficult to read. But there might be situations, where technically a correct placement of an item in the holder is required. For example, bottles with liquids should be placed in an upright position. Using two transponders per item can be advantageous. The RFID-reader (for that the RFID-antenna is associated with the holder) would be able to interrogate only one transponder. Assuming that the data in the transponders indicates the placement on the item (e.g. at the head, at the foot), the data at the output of the processor would indicate the placement direction.

The components of the RFID-reader 180 (i.e., antenna units, reader-circuit with multiplexer and data processor) can be implemented differently, for example: antenna units and multiplexer on the same PCB, or antenna units and multiplexer connected by wires.

By using one antenna unit, sending the excitation signals can be implemented by sending as series of sub-signals with variable energy (i.e., radio signal strength settings), and/or via different channels (i.e., radio frequency settings). Similarly, receiving response signals (one antenna unit can be implemented by setting the antenna unit to variable sensitivity (of the circuitry) and/or to different channels.

References: 100, 200 item (in general), 101 parasitic item, 110 item-tag, 115 data-record on the item-tag, 120 item-antenna, 130 transponder, 150, 250 item holder, 155 planes, portion of the holder, 159 furniture element, 160, 260 reader-antenna, antenna-units, 165 base material, 166 forming pattern, 167 shielding, 169 range, 170 reader-circuit, 171 multiplexer, 172 data processor, 175 data provided by reader-circuit, 180 RFID-reader, 199 user, 300, 3xx method, steps

## Claims

1. RFID-reader (180) having a reader-antenna (160) and a reader-circuit (170), the RFID-reader (180) being adapted to interrogate RFID-transponders (130, 130-A, 130-B), each RFID-transponder (130, 130-A, 130-B) having an item-tag (110, 110-A, 110-B) and an item-antenna (120, 120-A, 120-B), the RFID-reader (180) adapted to interrogate the RFID-transponders (130, 130-A, 130-B) by sending excitation signals (Ex, Ex1, Ex2) and by receiving response signals (Re, ReA, ReB),
**the RFID-reader (180) characterized in that**
(1) the reader-antenna (160) is adapted for being physically associated with an item holder (150) that is adapted to retain one or more items (100, 100-A, 100-B) at random positions (XRA, XRB) within the holder (100), and wherein at least one RFID-transponder (130, 130-A, 130-B) is attached to each item (100, 100-A, 100-B);
(2) the reader-antenna (160) is adapted for being physically associated with the item holder (150) by having at least a first antenna unit (160-1) and a second antenna unit (160-2) that are adapted to be physically associated with the item holder (150), such that - for any random position (XR, XRA, XRB) of an item (100, 100-A, 100-B) within the item holder (150) - the physical antenna-to-antenna distance (D, DA, DB) stays below a maximal interrogation distance (Dmax) for at least one of the antenna units (160-1, 160-2);
(3) the reader-circuit (170) comprises a multiplexer (171) that is adapted to enable the reader-circuit (170) to consecutively send a first excitation signal (Ex1) towards the one or more item-tags (110, 110-A, 110-B) via the first antenna unit (160-1) and a second excitation signal (Ex2) towards the item-tag (110, 110-A, 110-B) via the second antenna unit (160-2); and
(4) the reader-circuit (170) comprises a data processor (172) that is adapted to derive data-signals (175, 175-A, 175-B) that correspond to data-records (115) of the item-tags (110, 110-A, 110-B), from one or more response signals (ReA) received at the first antenna unit (160-1) or from one or more response signals (ReB) received at the second antenna unit (160-2).

2. The RFID-reader (180) according to claim 1, in that the multiplexer (171) is adapted to enable the first antenna unit (160-1) to receive one or more response signals (ReA) during a first time slot and to consecutively enable the second antenna unit (160-2) to receive response signals (ReB) during a second time slot.

3. The RFID-reader (180) according to claim 2, wherein in the reader-circuit (170), the data processor (172) is adapted to derive data-signals (175, 175A, 175B) from response signals (ReA) received at the first antenna unit (160-1) that result from the first excitation signal (Ex1), or from response signals (ReB) received at the second antenna unit (160-2) that result from the second excitation signal (Ex2).

4. RFID-reader (180) according to claim 2, wherein in the reader-circuit (170), the data processor (172) is adapted to derive data-signals (175, 175A, 175B) from response signals received at the first antenna unit (160-1) that result from either the first excitation signal (Ex1) or from the from the second excitation signal (Ex2) and from response signals received at the second antenna unit (160-2) that result from either the first excitation signal (Ex1) or from the from the second excitation signal (Ex2).

5. The RFID-reader (180) according to any of the preceding claims, wherein the maximal interrogation distance (Dmax) is the physical distance between an item-antenna (120, 120-A, 120-B) and the reader-antenna (160, 160-1, 160-2), wherein the RFID-reader (180) is able to interrogate the RFID-transponder (130) in case of compliance with the following interrogation conditions:
(i) the reader-circuit (170) is able to send the first and second excitation signals (Ex1, Ex2) to the one or more item-tags (110, 110-A, 110-B),
(ii) an item-tag (110, 110-A, 110-B) that has received any of the excitation signals (Ex1, Ex2) is able to consecutively send a response signal (ReA, ReB), and
(iii) the reader-circuit (170) is able to decode the response signal (ReA, ReB) and to derive a data-signal (175, 175-A, 175-B) that corresponds to the data-record (115) of the item-tag (110).

6. The RFID-reader (180) according to claim 5, wherein the maximal interrogation distance (Dmax) is a reduced distance (Dmax short) that is calculated for one or more of the following constraints:
(iv) the item holder (150) holds a number of items (100) that physically fit to the item holder (150) and that attenuate excitation and response signals; and
(v) the item holder (150) holds a further item (101) that attenuates radio signals.

7. The RFID-reader (180) according to any of the preceding claims, wherein the reader-antenna (160) with the first antenna unit (160-1) and the second antenna unit (160-2) is implemented such that an effective projection from the item-antennas to the antenna units is maximized.

8. The RFID-reader (180) according to any of the preceding claims, wherein the reader-antenna (160) with the first antenna unit (160-1) and the second antenna unit (160-2) is implemented on a base (165) that is at least partially being coated by conductive material, forming the first antenna unit (160-1) and - being electrically isolated therefrom - forming the second antenna unit (160-2).

9. The RFID-reader (180) according to claim 8, wherein the reader-antenna (160) is adapted for being physically associated with an item holder (150) by the base (165) being formable.

10. The RFID-reader (180) according to claim 9, wherein the reader-antenna (160) is implemented as a printed circuit board (PCB), or wherein the reader-antenna (160) is implemented as a foil.

11. The RFID-reader (180) according to claim 9, wherein the reader-antenna (160) is adapted for being physically associated with an item holder (150) by the base (165) having a forming pattern (166).

12. The RFID-reader (180) according to any of the preceding claims, wherein a shielding (167) is provided to keep the excitation signals and the response signals within the item holder.

13. Method (300) for adapting an RFID-reader (180) having a reader-antenna (160) and having a reader-circuit (170) to interrogate one or more RFID-transponders (130), each RFID-transponder (130) with item-tags (110) and with item-antennas (120), wherein the RFID-transponders (130) are attached to one or more items (100) that are retained by an item holder (150), the method (300) comprising:
determining (310) a maximal interrogation distance (Dmax) being an antenna-to-antenna distance between the item-antenna (120) and the reader-antenna (160);
determining (320) a number (P) of holder planes (155-p) of the item holder (150), wherein antenna units (160-p) are able to be associated with holder planes (155-p);
determining (330) a number (R) of potential random positions (XR = X1, X2, X3, X4) for that the item holder (150) is adapted to retain at least one item (100) within the holder (100);
associating (340) a particular antenna unit (160-1) with a particular holder plane (155-1) and determining the random positions for that the antenna-to-antenna distance (D) is below the maximal interrogation distance (Dmax);
repeating (350) the associating step for further antenna units (160-2, 160-3) and for further holder planes (155-2, 155-3) until the antenna-to-antenna distance (D) is below the maximal interrogation distance (Dmax) for all potential random positions for at least one of the antenna units; and
determining (360) the overall number of holder planes (P=3) as a multiplexer value for that the reader-circuit (170) of the RFID-reader (180) consecutively lets the reader-circuit (170) use the antenna units (160-1, 160-2, 160-3) for interrogating the item-tags.

14. The method (300) according to claim 13, wherein determining (310) the maximal interrogation distance (Dmax) is performed for a condition that the item holder (150) holds a maximal number of items.

15. The method (300) of claim 13, wherein associating (340) a particular antenna unit (160-1) with a particular holder plane is implemented in computer aided design environments with the following activities:
identifying a portion of the item holder under the condition that an antenna unit can be associated with this portion;
making projections, from the edges of the item-antennas to the holder portions in case that the items are located in the positions that is expected during use; and dimensioning the antenna units such that the projections to antenna units are maximized.
